# EUROPEAN PATENT SPECIFICATION

(11) **EP 4 428 978 B1**
(45) Date of publication and mention of the grant of the patent: **25.11.2026**
(21) Application number: 22907780.5
(22) Date of filing: 01.12.2022
(51) Int. Cl.: H01M 10/0564, H01M 10/08

(54) **SOLID ELECTROLYTE AND ALL SOLID BATTERY COMPRISING SAME**
FESTELEKTROLYT UND FESTKÖRPERBATTERIE DAMIT
ÉLECTROLYTE SOLIDE ET BATTERIE ENTIÈREMENT SOLIDE LE COMPRENANT

(30) Priority: 16.12.2021 KR 20210180701
(43) Date of publication of application: 11.09.2024
(73) Proprietor: LG Energy Solution, Ltd., Seoul 07335 (KR)
(72) Inventor: LEE, Jung Pil, Daejeon 34122 (KR); NAM, Sunghyun, Daejeon 34122 (KR); KIM, Dong Kyu, Daejeon 34122 (KR)
(74) Representative: Goddar, Heinz J.
(86) International application number: PCT/KR2022/019337
(87) International publication number: WO 2023/113311

(56) References cited:
- WO-A1-2021/011439
- WO-A2-2021/003184
- CN-A- 111 740 157
- KR-A- 20130 060 912
- KR-A- 20180 124 540
- KR-A- 20200 019 178
- POLU ANJI REDDY, SINGH PRAMOD K.: "Improved ion dissociation and amorphous region of PEO based solid polymer electrolyte by incorporating tetracyanoethylene", MATERIALS TODAY: PROCEEDINGS, ELSEVIER, NL, vol. 49, 1 January 2022 (2022-01-01), NL , pages 3093 - 3097, XP093070981, ISSN: 2214-7853, DOI: 10.1016/j.matpr.2020.10.950

## Description

### [Technical Field]

The present invention relates to a solid electrolyte and an all-solid battery comprising the same.

### [Background Art]

Various batteries that can overcome the limitations of the current lithium secondary battery in terms of the capacity, safety, output, large size, and miniaturization of the battery are being studied.

Typically, there is continuous research on a metal-air battery which has a very large theoretical capacity in terms of capacity compared to the current lithium secondary batteries, an all-solid battery with no risk of explosion in terms of safety, a supercapacitor in terms of output, a NaS battery or redox flow battery (RFB) in terms of large size, and a thin film battery in terms of miniaturization and the like.

Among them, the all-solid battery refers to a battery in which the liquid electrolyte used in the existing lithium secondary battery is replaced with a solid one, and since it does not use flammable solvents in the battery, ignition or explosion due to the decomposition reaction of the conventional electrolyte solution does not occur at all, safety can be greatly improved. In addition, since Li metal or Li alloy can be used as a material for the negative electrode, there is an advantage that the energy density for the mass and volume of the battery can be dramatically improved.

As such, the all-solid battery has the advantage of improved safety compared to conventional batteries using liquid electrolyte, but still needs to be improved in terms of energy density and lifetime.

In order to provide an all-solid battery with high energy density and high lifetime characteristics, it is necessary to improve the ion conductivity of the solid electrolyte contained in the all-solid battery. However, there is a problem that the ion conductivity is somewhat lowered due to the interfacial resistance of the solid electrolyte.

Accordingly, it is necessary to develop a technology that can improve ion conductivity by reducing the interfacial resistance of the solid electrolyte.

### [Prior Art Document]

### [Patent Document]

(Patent Document 1) Korean Patent Publication No. 2020-0118800

CN 111740157 A discloses a composite solid electrolyte material for solid state batteries comprising polyvinylidene fluoride, LLZTO, lithium bis(trifluoromethylsulfonyl)imide, and 2,3-dichloro-5,6-dicyano-1,4-benzoquinone.

WO 2021/003184 A2 discloses a solid polymer electrolyte consisting of PPS/chloranil/LiTFS-LiFSI-LiBOB.

### [Disclosure]

### [Technical Problem]

The inventors of the present invention have conducted research in various ways to solve the above problems, and as a result, have confirmed that the interfacial resistance of the solid electrolyte prepared using a binder together with a solid-phase lithium dissociation material and a lithium salt is reduced, and accordingly, the ion conductivity is surprisingly improved.

Therefore, an object of the present invention is to provide a solid electrolyte for an all-solid battery with improved ion conductivity.

In addition, another object of the present invention is to provide an all-solid battery with improved energy density and lifetime characteristics by improving ion conductivity.

### [Technical Solution]

In order to achieve the above object, the present invention provides a solid electrolyte, consisting of:
a solid-phase lithium dissociation material, wherein the solid-phase lithium dissociation material comprises at least one selected from the group consisting of chloranil, 2,3-dichloro-5,6-dicyano-1,4-benzoquinone (DDQ), tetracyanoethylene (TCNE) and trinitrofluorenone (TNF);
a binder, wherein the binder comprises at least one selected from the group consisting of styrene-butadiene rubber (SBR), polytetrafluoroethylene, carboxymethylcellulose, polyacrylic acid, lithium polyacrylate and polyvinylidene fluoride; and
a lithium salt, wherein the lithium salt comprises at least one selected from the group consisting of lithium bis(trifluoromethanesulphonyl)imide (LiTFSI) and lithium bis(fluorosulfonyl)imide (LiFSI).

In addition, the present invention provides an all-solid battery including a positive electrode, a negative electrode, and the solid electrolyte described above. Further embodiments are disclosed in the dependent claims.

### [Advantageous Effects]

The solid electrolyte according to the present invention has an effect of improving adhesive force and strength due to the binder, and thus reducing interfacial resistance, thereby improving ion conductivity.

In addition, the all-solid battery according to the present invention has an effect of improving energy density and lifetime characteristics due to the solid electrolyte with improved ion conductivity.

### [Description of Drawings]

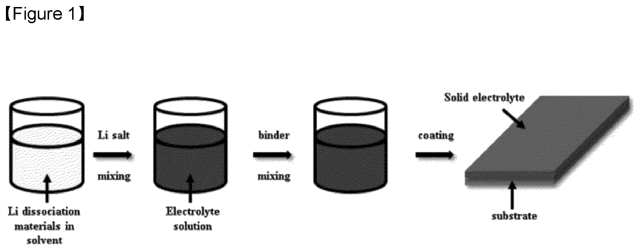

FIG. 1 is a schematic diagram showing a process for preparing a solid electrolyte according to an embodiment of the present invention.

### [Best Mode]

Hereinafter, the present invention will be described in more detail to assist understanding of the present invention.

### Solid electrolyte

The present invention relates to a solid electrolyte for an all-solid battery, wherein the solid electrolyte consists of:
a solid-phase lithium dissociation material, wherein the solid-phase lithium dissociation material comprises at least one selected from the group consisting of chloranil, 2,3-dichloro-5,6-dicyano-1,4-benzoquinone (DDQ), tetracyanoethylene (TCNE) and trinitrofluorenone (TNF);
a binder, wherein the binder comprises at least one selected from the group consisting of styrene-butadiene rubber (SBR), polytetrafluoroethylene, carboxymethylcellulose, polyacrylic acid, lithium polyacrylate and polyvinylidene fluoride; and
a lithium salt, wherein the lithium salt comprises at least one selected from the group consisting of lithium bis(trifluoromethanesulphonyl)imide (LiTFSI) and lithium bis(fluorosulfonyl)imide (LiFSI). The solid electrolyte may be a polymer solid electrolyte.

The solid electrolyte according to the present invention improves the ion conductivity and can be manufactured as an electrolyte membrane since the adhesive force and strength are enhanced by the binder and thus the interfacial resistance is reduced.

In the present invention, the solid-phase lithium dissociation material promotes ion transfer by dissociating lithium salt, thereby improving electrical conductivity without reducing ion conductivity by the lithium salt.

The solid-phase lithium dissociation material comprises at least one selected from the group consisting of chloranil, 2,3-dichloro-5,6-dicyano-1,4-benzoquinone (DDQ), tetracyanoethylene (TCNE) and trinitrofluorenone (TNF).

In addition, the solid-phase lithium dissociation material may be contained in an amount of 20 to 90% by weight based on the total weight of the solid electrolyte. Specifically, the content of the solid-phase lithium dissociation material may be 30% by weight or more, 40% by weight or more, or 50% by weight or more, and may be 80% by weight or less, 70% by weight or less, or 60% by weight or less. If the content of the solid-phase lithium dissociation material is less than 20% by weight, the dissociation of lithium may not be sufficiently performed, and the ion conductivity of the solid electrolyte may be lowered. If the content of the solid-phase lithium dissociation material exceeds 90% by weight, the content of the lithium salt is relatively reduced, and thus ion conductivity may be lowered.

In the present invention, the binder can improve ion conductivity by improving the adhesive force and strength of solid electrolyte and thus reducing interfacial resistance.

The binder isat least one selected from the group consisting of styrene-butadiene rubber (SBR), polytetrafluoroethylene, carboxymethylcellulose, polyacrylic acid, lithium polyacrylate and polyvinylidene fluoride.

In addition, the binder may be contained in an amount of 3 to 40% by weight based on the total weight of the solid electrolyte. Specifically, the content of the binder may be 5% by weight or more, 10% by weight or more, or 15% by weight or more, and may be 40% by weight or less, 30% by weight or less, or 20% by weight or less. If the content of the binder is less than 3% by weight, there is a problem that it is difficult to manufacture an electrolyte membrane. If the content of the binder exceeds 40% by weight, there may be a problem that the ion conductivity is lowered.

In the present invention, the lithium salt can impart ion conductivity to the solid electrolyte, and can improve ion conductivity by the solid-phase lithium dissociation material.

The lithium salt comprises at least one selected from the group consisting of lithium bis(trifluoromethanesulphonyl)imide (LiTFSI) and lithium bis(fluorosulfonyl)imide (LiFSI).

In addition, the lithium salt may be contained in an amount of 10 to 80% by weight based on the total weight of the solid electrolyte. Specifically, the content of the lithium salt may be 20% by weight or more, 30% by weight or more, or 40% by weight or more, and may be 70% by weight or less, 60% by weight or less, or 50% by weight or less. If the content of the lithium salt is less than 10% by weight, since the source of lithium is insufficient, the ion conductivity of the solid electrolyte may be lowered. If the content of the lithium salt exceeds 80% by weight, since the content of the solid-phase lithium dissociation material is relatively reduced, electrical conductivity may be lowered.

In the present invention, the solid electrolyte may be in the form of a solid electrolyte membrane. In this case, the thickness of the solid electrolyte may be 5 µm to 150 µm. If the thickness of the solid electrolyte is less than 5 µm, it may be difficult to serve as an insulating film due to weak strength, or there may be a problem that processability is lowered. If the thickness of the solid electrolyte exceeds 150 µm, there may be a problem that the energy density is lowered.

In the present invention, the solid electrolyte may not comprise a polymer having ion conductivity, in addition to the solid-phase lithium dissociation material, the binder and the lithium salt as described above, and more specifically, consists of the solid-phase lithium dissociation material, the binder, and the lithium salt. Since the solid electrolyte of the present invention does not include a separate polymer having ion conductivity and thus the ion conduction mechanism between the polymers is not different, the effect of increasing the ion conductivity can be increased.

### Preparation methods of solid electrolyte

The present invention also relates to a method for preparing a solid electrolyte comprising the steps of (S1) coating a mixture containing a solid-phase lithium dissociation material, a binder, and a lithium salt on a substrate; (S2) drying the coating layer obtained in step (S1); and (S3) separating the coating layer from the substrate to obtain a solid electrolyte, after drying in step (S2).

Hereinafter, the method for preparing a solid electrolyte according to the present invention will be described in detail for each step.

In the present invention, in step (S1), a mixture including a solid-phase lithium dissociation material, a binder and a lithium salt may be coated on a substrate. The types and contents of the solid-phase lithium dissociation material, binder, and lithium salt are as described above.

FIG. 1 is a schematic diagram showing a process of forming a coating layer for preparing a solid electrolyte on a substrate according to an embodiment of the present invention.

Referring to FIG. 1, the first mixture (Li dissociation material /Li salt solution) may be obtained by dissolving the solid-phase lithium dissociation material in a solvent to prepare a solid-phase lithium dissociation material solution (Li dissociation material solution), and then mixing a lithium salt (Li salt).

Thereafter, a binder may be mixed with the first mixture (Li dissociation material /Li salt solution) to obtain the second mixture (Li dissociation material /Li salt/binder solution), and then coated on the substrate.

The solvent is not particularly limited as it can dissolve the solid-phase lithium dissociation material, the binder, and the lithium salt. For example, the solvent may include dimethylsulfoxide (DMSO), isopropyl alcohol, N-methylpyrrolidone (NMP), acetone or water, and one of these may be used alone or two or more of these may be used. The amount of the solvent used may dissolve or disperse the solid-phase lithium dissociation material, the binder, and the lithium salt, in consideration of the coating thickness of the coating layer and the physical properties of the solid electrolyte to be manufactured, etc.

The substrate is not particularly limited as long as it is used in a coating process for forming a solid electrolyte. For example, the substrate may be a glass substrate or a plastic substrate, and the plastic substrate may be polyethylene terephthalate, polyethylene naphthalate, polypropylene, or polyethylene.

In addition, the coating method may be bar coating, roll coating, spin coating, slit coating, die coating, blade coating, comma coating, slot die coating, lip coating or solution casting, but is not limited thereto as long as it is a coating method capable of forming a coating layer on the substrate.

In the present invention, in step (S2), the coating layer obtained in step (S1) may be dried.

The drying is not particularly limited as long as it is a drying method capable of forming a coating layer for forming a solid electrolyte by evaporating the solvent contained in the coating layer. For example, the drying may be performed at 100°C or less.

In the present invention, in step (S3), the coating layer may be separated from the substrate after drying step (S2) to obtain a solid electrolyte.

### All-solid battery

The present invention also relates to an all-solid battery comprising the above-described solid electrolyte, wherein the all-solid battery may comprise a positive electrode, a negative electrode, and the solid electrolyte interposed therebetween.

In the present invention, the positive electrode comprises a positive electrode current collector and a positive electrode active material layer formed on the positive electrode current collector.

The positive electrode active material layer comprises a positive electrode active material, a binder and an electrically conductive material.

The positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide (LiCoO₂), lithium nickel oxide (LiNiO₂), Li[NiₓCo_{y}Mn_{z}Mᵥ]O₂(wherein, M is any one or two or more elements selected from the group consisting of Al, Ga and In; 0.3≤x<1.0, 0≤y, z≤0.5, 0≤v≤0.1, x+y+z+v=1), Li(LiₐM_{b-a-b'}M'_{b'})O_{2-c}A_{c}(wherein, 0≤a≤0.2, 0.6≤b≤1, 0≤b'≤0.2, 0≤c≤0.2; M comprises Mn and at least one selected from the group consisting of Ni, Co, Fe, Cr, V, Cu, Zn and Ti; M' is at least one selected from the group consisting of Al, Mg and B, and A is at least one selected from the group consisting of P, F, S and N); lithium manganese oxide such as Formula Li_{1+y}Mn_{2- y}O₄ (wherein, y is 0 to 0.33), LiMnO₃, LiMn₂O₃, LiMnO₂; lithium copper oxide (Li₂CuO₂); vanadium oxide such as LiV₃O₈, LiFe₃O₄, V₂O₅, Cu₂V₂O₇; Ni site type lithium nickel oxide represented by Formula LiNi_{1-y}MyO₂ (wherein, M is Co, Mn, Al, Cu, Fe, Mg, B or Ga, y is 0.01 to 0.3); lithium manganese composite oxide represented by Formula LiMn_{2-y}M_{y}O₂ (wherein, M is Co, Ni, Fe, Cr, Zn or Ta, y is 0.01 to 0.1) or Li₂Mn₃MO₈ (wherein, M is Fe, Co, Ni, Cu or Zn); LiMn₂O₄ in which a part of Li in the Formula is substituted with alkaline earth metal ions; disulfide compounds; Fe₂(MoO₄)₃.

The positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists bonding between the positive electrode active material and the electrically conductive material, and assists in bonding to the current collector. The binder may comprise at least one selected from the group consisting of styrene butadiene rubber, acrylated styrene butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinyl pyrrolidone, polyvinyl pyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride-hexafluoropropene). Preferably, the binder may comprise at least one selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and, specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be lowered. If the content of the binder exceeds 30% by weight, the adhesive force is improved, but the content of the positive electrode active material is reduced by that amount, and thus the capacity of the battery may be lowered.

In addition, the electrically conductive material is not particularly limited as long as it prevents side reactions in the internal environment of the all-solid battery and has excellent electrical conductivity without causing chemical changes in the battery. The electrically conductive material may be typically graphite or conductive carbon, and for example, as the electrically conductive material, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; and electrically conductive polymers such as polyphenylene derivatives may be used alone or in combination of two or more thereof, but is not necessarily limited thereto.

The electrically conductive material may be generally contained in an amount of 0.5% by weight to 30% by weight based on the total weight of the positive electrode active material layer, and specifically, the content of the electrically conductive material may be 0.5% by weight or more or 1% by weight or more, and may be 20% by weight or less or 30% by weight or less. If the content of the electrically conductive material is too small, i.e., less than 0.5 % by weight, it is difficult to expect an effect of improving electrical conductivity or the electrochemical properties of the battery may be deteriorated. If the content of the electrically conductive material exceeds 30% by weight and thus is too large, the amount of the positive electrode active material may be relatively small, so that the capacity and energy density may be lowered. A method for incorporating the electrically conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode is manufactured by coating and drying a composition for forming the positive electrode active material layer prepared by mixing the positive electrode active material, the electrically conductive material and the binder in an organic solvent, onto the positive electrode current collector, and optionally compression-molding it onto the positive electrode current collector to improve the density of the positive electrode. At this time, as the organic solvent, it is preferable to use one that can uniformly disperse the positive electrode active material, the binder, and the electrically conductive material and that evaporates easily. Specifically, acetonitrile, methanol, ethanol, tetrahydrofuran, water, isopropyl alcohol and the like are exemplified.

In the present invention, the negative electrode comprises a negative electrode current collector and a negative electrode active material layer formed on the negative electrode current collector. The negative electrode active material layer comprises a negative electrode active material, a binder, and an electrically conductive material.

The negative electrode active material may be a material capable of reversibly intercalating or de-intercalating lithium ion(Li⁺), a material capable of reacting with lithium ion to reversibly form a lithium-containing compound, Li-metal or a lithium alloy.

The material capable of reversibly intercalating or de-intercalating lithium ion (Li⁺) may be, for example, crystalline carbon, amorphous carbon or mixtures thereof. The material capable of reacting with lithium ion (Li⁺) to reversibly form a lithium-containing compound may be, for example, tin oxide, titanium nitrate or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be Li-metal, and specifically, may be in the form of a Li-metal thin film or Li-metal powder.

The negative electrode active material may be contained in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the electrically conductive material is the same as described above for the positive electrode active material layer.

In addition, the negative electrode current collector is not particularly limited as long as it has electrical conductivity without causing chemical change in the battery, and for example, the negative electrode current collector may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having a fine irregularity structure on its surface, a sheet, a foil, a net, a porous body, a foam, and a non-woven fabric, as in the positive electrode current collector.

The manufacturing method of the negative electrode is not particularly limited, and may be manufactured by forming a negative electrode active material layer on a negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also comprised in the negative electrode of the present invention.

Manufacturing of the all-solid battery having the configuration described above is not particularly limited in the present invention, and a known method may be used.

In the manufacture of the all-solid battery of the present invention, the electrodes including the positive electrode and the negative electrode are placed and then pressed and molded to assemble the cell.

The assembled cell is installed in an exterior material and then sealed by heat compression or the like. As the exterior material, a laminated pack made of aluminum or stainless steel, or a cylindrical or rectangular metal container is very suitable.

Hereinafter, preferred examples of the present invention will be described in order to help understanding of the present invention. It will be apparent to those skilled in the art, however, that the following examples are illustrative of the present invention and that various changes and modifications can be made within the scope and spirit of the present invention, and also it is natural that such variations and modifications are within the scope of the appended claims.

### Examples

In the following Examples and Comparative Examples, solid electrolytes for an all-solid battery were prepared according to the weight ratio of the solid-phase lithium dissociation material, lithium salt, and binder as shown in Table 1 below.

**Table 1:**

| | Solid electrolyte | | | |
|---|---|---|---|---|
| | A: lithium dissociation material | B: lithium salt | C: binder | Weight ratio (A:B:C) |
| Example 1 | Chloranil | LiTFSI | PVDF | 0.5:1:0.3 |
| Example 2 | Chloranil | LiTFSI | PVDF | 0.5:1:0.6 |
| Example 3 | Chloranil | LiTFSI | PVDF | 0.75:0.75:0.3 |
| Example 4 | Chloranil | LiTFSI | PVDF | 1:0.5:0.3 |
| Example 5 | DDQ | LiTFSI | PVDF | 1:0.5:0.3 |
| Example 6 | Chloranil | LiFSI | PVDF | 1:0.5:0.3 |
| Comparative Example 1 | PEO | LiTFSI | - | 0.5:1:0 |
| Comparative Example 2 | Chloranil | LiTFSI | - | 0.5:1:0 |
| Comparative Example 3 | Chloranil | LiTFSI | PVDF | 0.5:1:0.9 |
| Comparative Example 4 | PEO / Chloranil | LiTFSI | PVDF | 1.8:0.5:1:0.3 |

### Example 1

### (1) Preparation of solid electrolyte

Chloranil as a solid-phase lithium dissociation material was dissolved in a solvent to prepare a lithium dissociation material solution, and then, LiTFSI as a lithium salt was mixed to obtain a first mixture. At this time, NMP was used as the solvent. The first mixture was mixed with PVDF as a binder to form the second mixture, and then, the second mixture was bar-coated on one surface of polyethylene terephthalate to form a coating layer. At this time, as shown in Table 1, the weight ratio of the solid-phase lithium dissociation material, the lithium salt, and the binder was set to be 0.5: 1: 0.3.

The coating layer was dried in a vacuum oven at 100 °C for 24 hours, and then separated from the substrate to prepare a solid electrolyte.

### Example 2

A solid electrolyte was prepared in the same manner as in Example 1, except that the weight ratio of the lithium dissociation material, the lithium salt, and the binder is set to be 0.5: 1: 0.6.

### Example 3

A solid electrolyte was prepared in the same manner as in Example 1, except that the weight ratio of the lithium dissociation material, the lithium salt, and the binder is set to be 0.75: 0.75: 0.3.

### Example 4

A solid electrolyte was prepared in the same manner as in Example 1, except that the weight ratio of the lithium dissociation material, the lithium salt, and the binder is set to be 1: 0.5: 0.3.

### Example 5

A solid electrolyte was prepared in the same manner as in Example 1, except that DDQ is used as the lithium dissociation material, and the weight ratio of the lithium dissociation material, the lithium salt, and the binder is set to be 1: 0.5: 0.3.

### Example 6

A solid electrolyte was prepared in the same manner as in Example 1, except that LiFSI is used as the lithium salt, and the weight ratio of the lithium dissociation material, the lithium salt, and the binder is set to be 1: 0.5: 0.3.

### Comparative Example 1

A solid electrolyte was prepared in the same manner as in Example 1, except that PEO is used instead of the lithium dissociation material, the binder is not used, and the weight ratio of PEO and the lithium salt is set to be 0.5: 1.

### Comparative Example 2

A solid electrolyte was prepared in the same manner as in Example 1, except that the binder is not used, and the weight ratio of the lithium dissociation material and the lithium salt is set to be 0.5:1.

### Comparative Example 3

A solid electrolyte was prepared in the same manner as in Example 1, except that the weight ratio of the lithium dissociation material, the lithium salt, and the binder is set to be 0.5: 1: 0.9.

### Comparative Example 4

A solid electrolyte was prepared in the same manner as in Example 1, except that PEO as an ion conductivity polymer is additionally used, and the weight ratio of the ion conductivity polymer, the lithium dissociation material, the lithium salt, and the binder is set to be 1.8: 0.5: 1: 0.3.

### Experimental Example 1: Evaluation of solid electrolyte

For the solid electrolytes prepared in the Examples and the Comparative Examples, a test for ion conductivity was performed as follows, and the results are shown in Table 2 below.

### (1) Ion conductivity

A sample of the solid electrolyte was brought into contact with a SUS electrode having the same surface area, and then an AC voltage was applied through the electrodes on both sides of the sample at room temperature. At this time, the measurement frequency as an applied condition was set to an amplitude range of 0.01 Hz to 1 MHz, and impedance was measured using Biologic company's VMP3. The resistance of the solid electrolyte was obtained from the intersection point (R_{b}) where the semicircle or straight line of the measured impedance trajectory meets the real number axis, and the ion conductivity of the solid electrolyte was calculated from the area and thickness of the sample. [Equation 1] $σ \left(S⋅{cm}^{- 1}\right) = \frac{1}{{R}_{b}} \frac{t}{A}$
σ: Ion conductivity
R_{b}: Intersection point of the impedance trajectory with the real number axis
A: Area of sample
t: Thickness of sample

**Table 2:**

| | Measured temperature (°C) | Thickness (*µ*m) | Ion conductivity (S/cm) |
|---|---|---|---|
| Example 1 | 25 | 147 | 4.3.E-06 |
| Example 2 | 25 | 200 | 8.6 E-07 |
| Example 3 | 25 | 105 | 6.5 E-06 |
| Example 4 | 25 | 110 | 9.3 E-06 |
| Example 5 | 25 | 94 | 9.2 E-06 |
| Example 6 | 25 | 89 | 8.7 E-06 |
| Comparative Example 1 | 25 | 43 | 9.2 E-08 |
| Comparative Example 2 | 25 | - | - |
| Comparative Example 3 | 25 | 185 | 6.3 E-09 |
| Comparative Example 4 | 25 | 56 | 1.3 E-07 |

As shown in Table 2, in the case of the present invention, it showed the performance far exceeding the ion conductivity of the conventional solid electrolyte membrane. **In** particular, the content of binder was important. **In** the case of Comparative Example 2, which does not contain the binder, it was not manufactured as a solid electrolyte membrane. As in Comparative Example 3, if the content of the binder was too high, the resistance was increased, thereby resulting in very low ion conductivity. **In** addition, even when mixed with the existing solid electrolyte, the effect of increasing ion conductivity was insignificant because the ion conduction mechanism was different.

## Claims

1. A solid electrolyte, consisting of:
a solid-phase lithium dissociation material, wherein the solid-phase lithium dissociation material comprises at least one selected from the group consisting of chloranil, 2,3-dichloro-5,6-dicyano-1,4-benzoquinone (DDQ), tetracyanoethylene (TCNE) and trinitrofluorenone (TNF);
a binder, wherein the binder comprises at least one selected from the group consisting of styrene-butadiene rubber (SBR), polytetrafluoroethylene, carboxymethylcellulose, polyacrylic acid, lithium polyacrylate and polyvinylidene fluoride; and
a lithium salt, wherein the lithium salt comprises at least one selected from the group consisting of lithium bis(trifluoromethanesulphonyl)imide (LiTFSI) and lithium bis(fluorosulfonyl)imide (LiFSI).

2. The solid electrolyte according to claim 1, wherein the solid-phase lithium dissociation material is contained in an amount of 20 to 90% by weight based on the total weight of the solid electrolyte.

3. The solid electrolyte according to claim 1, wherein the binder is contained in an amount of 3 to 40% by weight based on the total weight of the solid electrolyte.

4. The solid electrolyte according to claim 1, wherein the lithium salt is contained in an amount of 10 to 80% by weight based on the total weight of the solid electrolyte.

5. The solid electrolyte according to claim 1, wherein the solid electrolyte is in a form of a solid electrolyte membrane.

6. The solid electrolyte according to claim 5, wherein the solid electrolyte membrane has a thickness of 5 µm to 150 µm.

7. An all-solid battery, comprising:
a positive electrode;
a negative electrode; and
the solid electrolyte of any one of claims 1 to 6.

## Patentansprüche

1. Festelektrolyt, bestehend aus:
einem Festphasen-Lithiumdissoziationsmaterial, wobei das Festphasen-Lithiumdissoziationsmaterial mindestens eines ausgewählt aus der Gruppe bestehend aus Chloranil, 2,3-Dichlor-5,6-dicyano-1,4-benzochinon (DDQ), Tetracyanoethylen (TCNE) und Trinitrofluorenon (TNF) umfasst;
einem Bindemittel, wobei das Bindemittel mindestens eines ausgewählt aus der Gruppe bestehend aus Styrol-Butadien-Kautschuk (SBR), Polytetrafluorethylen, Carboxymethylcellulose, Polyacrylsäure, Lithiumpolyacrylat und Polyvinylidenfluorid umfasst; und
einem Lithiumsalz, wobei das Lithiumsalz mindestens eines ausgewählt aus der Gruppe bestehend aus Lithiumbis(trifluormethansulfonyl)imid (LiTFSI) und Lithiumbis(fluorsulfonyl)imid (LiFSI) umfasst.

2. Festelektrolyt nach Anspruch 1, wobei das Festphasen-Lithiumdissoziationsmaterial in einer Menge von 20 bis 90 Gew.-%, bezogen auf das Gesamtgewicht des Festelektrolyten, enthalten ist.

3. Festelektrolyt nach Anspruch 1, wobei das Bindemittel in einer Menge von 3 bis 40 Gew.-%, bezogen auf das Gesamtgewicht des Festelektrolyten, enthalten ist.

4. Festelektrolyt nach Anspruch 1, wobei das Lithiumsalz in einer Menge von 10 bis 80 Gew.-%, bezogen auf das Gesamtgewicht des Festelektrolyten, enthalten ist.

5. Festelektrolyt nach Anspruch 1, wobei der Festelektrolyt in Form einer Festelektrolytmembran vorliegt.

6. Festelektrolyt nach Anspruch 5, wobei die Festelektrolytmembran eine Dicke von 5 µm bis 150 µm aufweist.

7. Feststoffbatterie, umfassend:
eine positive Elektrode;
eine negative Elektrode; und
den Festelektrolyt nach einem der Ansprüche 1 bis 6.

## Revendications

1. Électrolyte solide, constitué de :
un matériau de dissociation du lithium en phase solide, dans lequel le matériau de dissociation du lithium en phase solide comprend un ou plusieurs éléments sélectionnés dans le groupe constitué de chloranil, 2,3-dichloro-5,6-dicyano-1,4-benzoquinone (DDQ), tétracyanoéthylène (TCNE) et trinitrofluorénone (TNF) ;
un liant, dans lequel le liant comprend un ou plusieurs éléments sélectionnés dans le groupe constitué de caoutchouc de styrène-butadiène (SBR), polytétrafluoroéthylène, carboxyméthylcellulose, acide polyacrylique, polyacrylate de lithium et fluorure de polyvinylidène ; et
un sel de lithium, dans lequel le sel de lithium comprend un ou plusieurs éléments sélectionnés dans le groupe constitué de lithium bis(trifluorométhanesulphonyl)imide (LiTFSI) et lithium bis(fluorosulfonyl)imide (LiFSI).

2. Électrolyte solide selon la revendication 1, dans lequel le matériau de dissociation du lithium en phase solide est contenu dans une quantité de 20 à 90 % en poids sur la base du poids total de l'électrolyte solide.

3. Électrolyte solide selon la revendication 1, dans lequel le liant est contenu dans une quantité de 3 à 40 % en poids sur la base du poids total de l'électrolyte solide.

4. Électrolyte solide selon la revendication 1, dans lequel le sel de lithium est contenu dans une quantité de 10 à 80 % en poids sur la base du poids total de l'électrolyte solide.

5. Électrolyte solide selon la revendication 1, dans lequel l'électrolyte solide est sous la forme d'une membrane d'électrolyte solide.

6. Électrolyte solide selon la revendication 5, dans lequel la membrane d'électrolyte solide a une épaisseur de 5 µm à 150 µm.

7. Batterie tout-solide comprenant :
une électrode positive ;
une électrode négative ; et
l'électrolyte solide selon l'une quelconque des revendications 1 à 6.
